(19) Europäisches Patentamt
European Patent Office
Office européen des brevets

(11) **EP 4 299 217 A1**

(12) **EUROPEAN PATENT APPLICATION**

(43) Date of publication:
**03.01.2024 Bulletin 2024/01**

(21) Application number: **23177180.9**

(22) Date of filing: **05.06.2023**

(51) International Patent Classification (IPC):
**B22F 10/28** (2021.01)     **B22F 12/70** (2021.01)
**B33Y 10/00** (2015.01)     **B33Y 30/00** (2015.01)
**B22F 12/41** (2021.01)

(52) Cooperative Patent Classification (CPC):
**B22F 10/28; B22F 12/41; B29C 64/153;**
**B29C 64/268; B29C 64/371; B33Y 10/00;**
**B33Y 30/00;** B22F 10/31; B22F 12/70;
B22F 2201/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.06.2022 JP 2022104255**

(71) Applicant: **Jeol Ltd.**
**Akishima-shi, Tokyo 196-8558 (JP)**

(72) Inventors:
• **SATO, Takashi**
 **Akishima, 196-8558 (JP)**
• **KIMURA, Atsushi**
 **Akishima, 196-8558 (JP)**
• **YAMAGAMI, Nobuhisa**
 **Akishima, 196-8558 (JP)**

(74) Representative: **Boult Wade Tennant LLP**
**Salisbury Square House**
**8 Salisbury Square**
**London EC4Y 8AP (GB)**

(54) **THREE-DIMENSIONAL POWDER BED FUSION ADDITIVE MANUFACTURING APPARATUS**

(57)     A powder bed fusion additive manufacturing (PBF-AM) apparatus (1) includes an electron gun chamber (2), a build chamber (3), a first vacuum pump (5), a second vacuum pump (6), and a beam path (8). In addition, the three-dimensional PBF-AM apparatus (1) includes a differential evacuation aperture (14), a focusing lens (12), and an axis adjustment mechanism (13). The differential evacuation aperture (14) divides an internal space of the beam path (8) into two, and has a restriction hole (14a) through which an electron beam (L1) can pass.

The focusing lens (12) is configured to focus the electron beam (L1) by restriction hole (14a) of the differential evacuation aperture (14). The axis adjustment mechanism (13) is configured to focus adjust a trajectory of the electron beam (L1) or positions of the focusing lens (12) and the differential evacuation aperture (14) so that an optical axis (L2) of the electron beam (L1) passes through both the center of the restriction hole (14a) and the center of the focusing lens (12).

EP 4 299 217 A1

**Description**

BACKGROUND

Technical Field

The present invention relates to a three-dimensional powder bed fusion additive manufacturing (PBF-AM) apparatus that builds an object by building up layers, in each of which a powder material is thinly spread, on a layer-by-layer basis.

Related Art

In recent years, a three-dimensional PBF-AM technique that builds an object by building up layers, in each of which a powder material is thinly spread, on a layer-by-layer basis is in the limelight, and many types of three-dimensional PBF-AM techniques have been developed owing to differences in materials of powder materials and manufacturing methods.

In a method of building an object with a conventional three-dimensional PBF-AM apparatus, for example, a powder material is spread, on a layer-by-layer basis, on a base plate installed on an upper surface of a stage. Next, with respect to the powder material spread on the base plate, only a two-dimensional structure portion corresponding to one cross-section of a built object is melted by a heating mechanism including an electron beam or a laser. Then, such layers of the powder material are built up on a layer-by-layer basis in a height direction (Z direction) to form a built object (see, for example, Patent Literature 1).

In addition, since a high voltage such as an acceleration voltage is applied to an electron gun that is a source of the electron beam, an electron gun chamber accommodating the electron gun is required to have a high degree of vacuum in order to reduce electric discharge. In addition, the inside of the electron gun chamber is evacuated by a vacuum pump in order to protect an electron source from residual gas that causes a chemical reaction such as oxidation.

However, it is necessary to frequently open a build chamber in which a build unit that builds a built object is accommodated to the atmosphere to replace the built object and the build unit. Furthermore, when the powder material is melted by the electron beam, steam is generated, and a degree of vacuum in the build chamber is lower than a degree of vacuum in the electron gun chamber.

In addition, the electron gun chamber and the build chamber physically communicate with each other by a beam path through which the electron beam passes. Then, not only the electron beam but also gas in the build chamber passes through the beam path. Therefore, the gas passes through the beam path from the build chamber having a low degree of vacuum to the electron gun chamber having a high degree of vacuum.

Therefore, in order to increase the degree of vacuum in the electron gun chamber, for example, there is used a differential evacuation system in which different vacuum pumps are connected to the electron gun chamber and the build chamber, and gas in the electron gun chamber and the build chamber are evacuated by the different vacuum pumps.

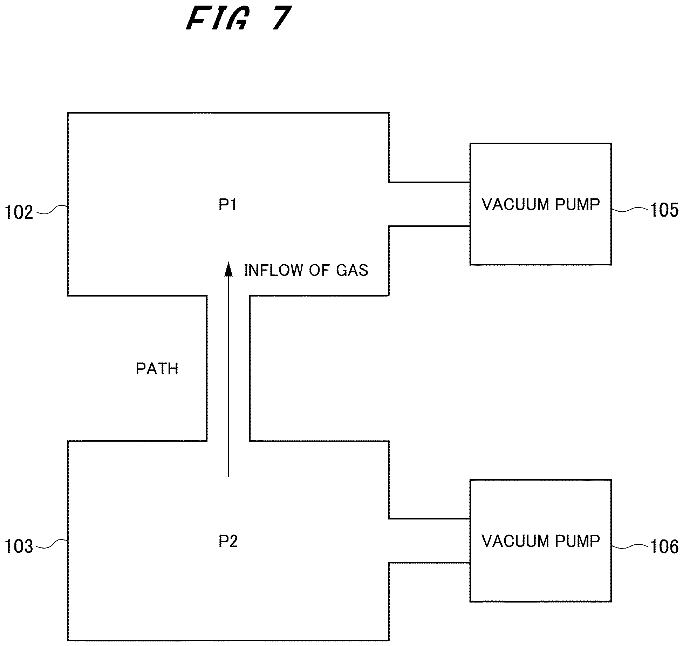

FIG. 7 is an explanatory diagram illustrating a relationship between a degree of vacuum in an electron gun chamber 102 and a degree of vacuum in a build chamber 103.

As illustrated in FIG. 7, a first vacuum pump 105 is connected to the electron gun chamber 102, and a second vacuum pump 106 is connected to the build chamber 103. In addition, the electron gun chamber 102 and the build chamber 103 physically communicate with each other through a beam path through which an electron beam passes. Then, gas in the build chamber 103 flows into the electron gun chamber 102 through the beam path.

Here, a pressure in the electron gun chamber 102 is a first pressure P1 (Pa), and a pressure in the build chamber 103 is a second pressure P2 (Pa). Then, the electron gun chamber 102 has a higher degree of vacuum than the build chamber 103 (P1 < P2). At this time, a gas flow rate Q (Pa·L/s) of the gas flowing from the build chamber 103 into the electron gun chamber 102 is obtained by the following Formula 1. Note that C is a characteristic value called conductance indicating ease of gas flow.

$$[\text{Formula 1}]$$

$$Q = C(P2 - P1)$$

Then, when the evacuation performance of the first vacuum pump 105 connected to the electron gun chamber 102 exceeds the gas flow rate Q, the electron gun chamber 102 can be maintained at a high degree of vacuum. In addition, the gas flow rate Q can be reduced by reducing conductance C to be small as illustrated in Formula 1.

Citation List

Patent Literature

Patent Literature 1: JP 2015-168228 A

SUMMARY

However, since the electron beam emitted from the electron gun continues to spread until being focused by a lens, it is difficult to reduce an opening diameter of the beam path communicating between the electron gun chamber and the build chamber. As the opening diameter of the beam path increases, conductance C increases, and a gas flow rate Q of the gas flowing from the build chamber into the electron gun chamber also increases. As a result, not only the degree of vacuum in the electron gun chamber decreases, but also a vacuum pump having more excellent evacuation performance is required.

An object of the present invention is to provide a three-dimensional PBF-AM apparatus capable of increasing a degree of vacuum of an electron gun chamber in consideration of the above problems.

In order to solve the above problems and achieve the object of the present invention, a three-dimensional PBF-AM apparatus of the present invention includes an electron gun chamber accommodating an electron gun, a build chamber accommodating a build unit to be irradiated with an electron beam emitted from the electron gun, a first vacuum pump, a second vacuum pump, and a beam path. The first vacuum pump evacuates gas in the electron gun chamber. The second vacuum pump evacuates gas in the build chamber. The electron beam path communicates the electron gun chamber and the build chamber, and the electron beam passes through the electron beam path.

In addition, the three-dimensional PBF-AM apparatus includes a differential evacuation aperture, a focusing lens, and an axis adjustment mechanism. The differential evacuation aperture is provided in the beam path to divide an internal space of the beam path into two, and has a restriction hole through which the electron beam can pass. The focusing lens focuses the electron beam emitted from the electron gun using the restriction hole of the differential evacuation aperture. The axis adjustment mechanism adjusts a trajectory of the electron beam or positions of the focusing lens and the differential evacuation aperture such that an optical axis of the electron beam passes through both the center of the restriction hole of the differential evacuation aperture and the center of the focusing lens.

According to the three-dimensional PBF-AM apparatus of the present invention, the degree of vacuum of the electron gun chamber can be increased.

BRIEF DESCRIPTION OF DRAWINGS

FIG. 1 is a cross-sectional diagram schematically illustrating a three-dimensional PBF-AM apparatus according to a first embodiment example of the present invention;
FIG. 2 is a cross-sectional diagram schematically illustrating a three-dimensional PBF-AM apparatus according to a second embodiment example of the present invention;
FIG. 3 is a cross-sectional diagram schematically illustrating a three-dimensional PBF-AM apparatus according to a third embodiment example of the present invention;
FIG. 4 is a cross-sectional diagram schematically illustrating a three-dimensional PBF-AM apparatus according to a fourth embodiment example of the present invention;
FIG. 5 is a cross-sectional diagram schematically illustrating a three-dimensional PBF-AM apparatus according to a fifth embodiment example of the present invention;
FIG. 6 is an explanatory diagram illustrating a periphery of an anode in the three-dimensional PBF-AM apparatus according to the fifth embodiment example; and
FIG. 7 is an explanatory diagram illustrating a relationship between a degree of vacuum in an electron gun chamber and a degree of vacuum in a build chamber.

DETAILED DESCRIPTION

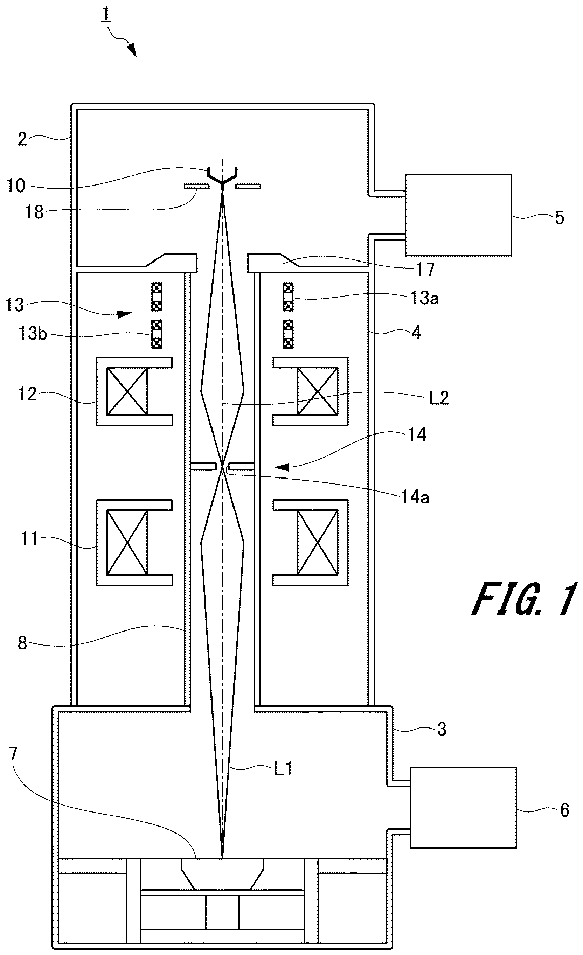

First, with reference to FIGS. 1 to 7, three-dimensional PBF-AM apparatuses according to embodiment examples of the present invention will be described. Note that the same reference signs are given to common members in the drawings.

1. First Embodiment Example

1-1. Configuration of Three-dimensional PBF-AM Apparatus 1

First, with reference to FIG. 1, a three-dimensional PBF-AM apparatus 1 according to a first embodiment example (hereinafter, referred to as "the present example") of the present invention will be described.
FIG. 1 is a cross-sectional diagram schematically illustrating the three-dimensional PBF-AM apparatus 1 of the present example.
The three-dimensional PBF-AM apparatus 1 illustrated in FIG. 1 is an apparatus that irradiates a powder material made of a metal powder of, for example, titanium, aluminum, iron, or the like with an electron beam L1 to melt the powder material, and builds up layers, in each of which the powder material is solidified, to build a three-dimensional object.
As illustrated in FIG. 1, the three-dimensional PBF-AM apparatus 1 includes an electron gun chamber 2, a build chamber 3, an electron optical chamber 4, a first vacuum pump 5, a second vacuum pump 6, a build unit 7, a beam path 8, and an electron source 10. The electron gun chamber 2 and the build chamber 3 are formed in a hollow shape. The first vacuum pump 5 is connected to the electron gun chamber 2, and the second vacuum pump 6 is connected to the build chamber 3. Air in the electron gun chamber 2 is evacuated by the first vacuum pump 5, and air in the build chamber 3 is evacuated by the second vacuum pump 6.
The build unit 7 is disposed inside the build chamber 3. Layers of the powder material are built up in the build unit 7. Then, the built up layers of the powder material is melted by being irradiated with an electron beam L1 from the electron source 10 to be described later.
The electron optical chamber 4 is connected to an upper portion of the build chamber 3. The electron optical chamber 4 accommodates the tubular beam path 8. A lower portion of the beam path 8 communicates with the build chamber 3, and an upper portion of the beam path 8 communicates with the electron gun chamber 2.
In the Inside of the electron gun chamber 2, the electron source 10 indicating a cathode, a Wehnelt 18, and an anode 17 are accommodated. Then, the electron source 10, the Wehnelt 18, and the anode 17 constitute an electron gun. The anode 17 is provided in an opening communicating with the beam path 8 in the electron gun chamber 2. The electron beam L1 emitted from the electron source 10 passes through the Wehnelt 18 and is emitted into the beam path 8 through the anode 17.
In addition, the output of the electron beam L1 emitted from the electron source 10, the Wehnelt 18, and the anode 17 is configured to be variable by a control device (not illustrated) according to a build process.
The electron optical chamber 4 includes an objective lens 11, a focusing lens 12, an axis adjustment mechanism 13, and a differential evacuation aperture (hereinafter, referred to as "differential evacuation AP") 14. In the present example, the objective lens 11, the focusing lens 12, and a coil that generates a magnetic field are included.
The differential evacuation AP14 is disposed between the objective lens 11 and the focusing lens 12 to be described later in the beam path 8. A restriction hole 14a through which the electron beam L1 can pass is formed in the differential evacuation AP14. The differential evacuation AP14 divides an internal space of the beam path 8 into two, that is, a space on a side of the electron gun chamber 2 and a space on a side of the build chamber 3.
The differential evacuation AP14 is provided, whereby gas hardly flows from the space on the side of the build chamber 3 to the space on the side of the electron gun chamber 2. In other words, conductance C can be reduced by the differential evacuation AP14, and the gas can be prevented from passing through the beam path 8 from the build chamber 3 and flowing into the electron gun chamber 2. This, as a result, makes it possible to set a degree of vacuum of the electron gun chamber 2 to a desired degree of vacuum without using a vacuum pump having high evacuation performance as the first vacuum pump 5.
In addition, since the degree of vacuum of the electron gun chamber 2 can be set to a high degree of vacuum, the electron source 10 disposed in the electron gun chamber 2 can be prevented from being deteriorated due to gas, and the product life of the electron source 10 can be increased.
The objective lens 11 is disposed closer to the side of the build chamber 3 than the differential evacuation AP14 in the electron optical chamber 4. Then, the objective lens 11 focuses the electron beam L1 that has passed through the axis adjustment mechanism 13, the focusing lens 12, and the differential evacuation AP14 so that the electron beam L1 has a predetermined beam diameter on a build surface of the build unit 7.
The focusing lens 12 is disposed closer to the side of the electron gun chamber 2 than the differential evacuation AP14 in the electron optical chamber 4, that is, on an upstream (electron source 10) side of the electron beam L1. The focusing lens 12 focuses the electron beam L1 that has passed through the anode 17 so that the electron beam L1 passes through the restriction hole 14a of the differential evacuation AP14. Specifically, the focusing lens 12 focuses the electron beam L1 so that a beam diameter of the electron beam L1 is smaller than an opening diameter of the restriction hole 14a. In addition, a focal position of the focusing lens 12 is adjusted to coincide with the center of the restriction hole 14a of the differential evacuation AP14.
By narrowing the beam diameter of the electron beam L1 by the focusing lens 12, the opening diameter of the restriction hole 14a of the differential evacuation AP14 can be further reduced. As a result, it is possible to further reduce the conductance C can be further reduced by the differential evacuation AP14, and it is possible to enhance the effect of preventing the inflow of the gas from the space on the side of the build chamber 3 to the space on the side of the electron gun chamber 2.

In addition, the focusing lens 12 makes the beam diameter of the electron beam L1 smaller than the opening diameter of the restriction hole 14a of the differential evacuation AP14, whereby it is possible to prevent the electron beam L1 from being emitted to the differential evacuation AP14. As a result, it is possible to prevent the electron beam L1 from hitting the differential evacuation AP14 and damaging the differential evacuation AP14.

The axis adjustment mechanism 13 is disposed between the focusing lens 12 and the electron gun chamber 2, that is, on the upstream (electron source 10) side of the electron beam L1 from the focusing lens 12. The axis adjustment mechanism 13 includes a first adjustment unit 13a and a second adjustment unit 13b. The first adjustment unit 13a and the second adjustment unit 13b are disposed along an optical axis L2 of the electron beam L1. The first adjustment unit 13a and the second adjustment unit 13b are electromagnetic deflectors that generate a magnetic field. In addition, as the first adjustment unit 13a and the second adjustment unit 13b, for example, saddle-type coils or other various electromagnetic deflectors are applied.

The first adjustment unit 13a and the second adjustment unit 13b adjust a trajectory of the electron beam L1 so that the trajectory of the electron beam L1 coincides with a magnetic field center of the focusing lens 12 and the center of the opening of the restriction hole 14a of the differential evacuation AP14 in a direction in which the optical axis L2 of the electron beam L1 that has passed through the anode 17 is orthogonal to the optical axis L2 (hereinafter, referred to as second direction). In other words, the axis adjustment mechanism 13 causes the entire electron beam L1 emitted from the electron source 10 to passes through the restriction hole 14a of the differential evacuation AP14. Consequently, the trajectory of the electron beam L1 can be prevented from deviating from the restriction hole 14a in the second direction, and the electron beam L1 can reliably pass through the restriction hole 14a. As a result, it is possible to reliably prevent the differential evacuation AP14 from being damaged by irradiating the differential evacuation AP14 with the electron beam L1, and it is possible to further enhance the safety of the three-dimensional PBF-AM apparatus 1.

In addition, two adjustment units that are the first adjustment unit 13a and the second adjustment unit 13b are provided as the axis adjustment mechanism 13, whereby the optical axis L2 can be adjusted to pass through two centers that are the center of the focusing lens 12 and the center of the restriction hole 14a.

As described above, the output of the electron beam L1 emitted from the electron source 10 changes according to a voltage applied to the Wehnelt 18. When the output of the electron beam L1 changes, the spread of the electron beam L1 also changes. Therefore, the control device can control the focusing lens 12 and the axis adjustment mechanism 13 according to the output of the electron beam L1. Consequently, even in a case where the output of the electron beam L1 changes, the optical axis L2 of the electron beam L1 can be caused to pass through the magnetic field center of the focusing lens 12 and the center of the opening of the restriction hole 14a of the differential evacuation AP14. Furthermore, a focal position of the focusing lens 12 can be aligned with a position of the center of the opening of the restriction hole 14a of the differential evacuation AP14.

2. Second Embodiment Example

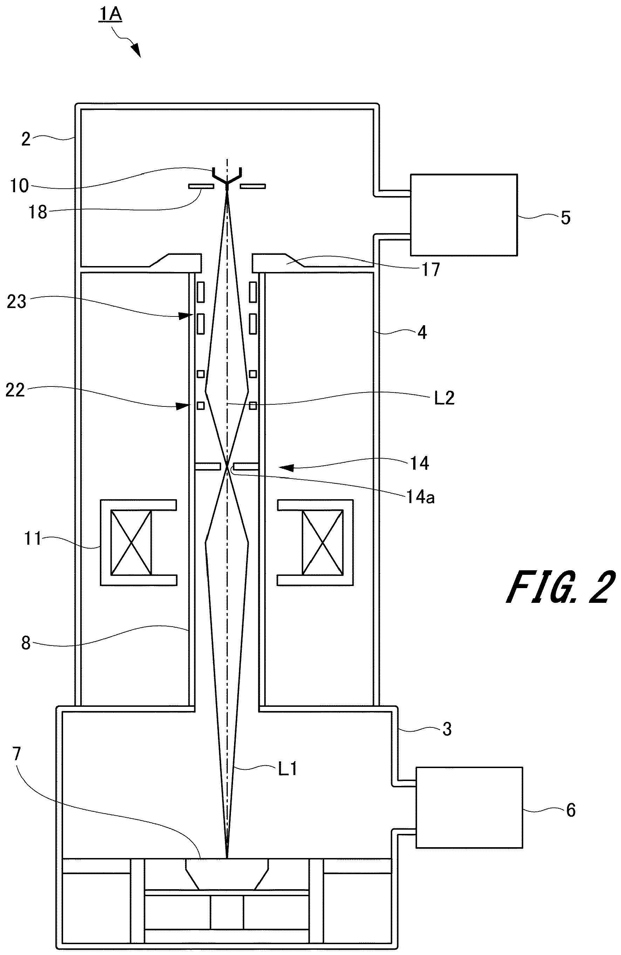

Next, with reference to FIG. 2, a three-dimensional PBF-AM apparatus 1A according to a second embodiment example will be described.

FIG. 2 is a schematic configuration diagram illustrating the three-dimensional PBF-AM apparatus 1A according to a second embodiment example.

The three-dimensional PBF-AM apparatus 1A according to the second embodiment example is different from the three-dimensional PBF-AM apparatus 1 according to the first embodiment example in configurations of a focusing lens and an axis adjustment mechanism. Therefore, parts in common with those of the three-dimensional PBF-AM apparatus 1 according to the first embodiment example, and redundant description will be omitted.

As illustrated in FIG. 2, the three-dimensional PBF-AM apparatus 1A includes a focusing lens 22 and an axis adjustment mechanism 23. The focusing lens 22 according to the second embodiment example is an electrostatic lens, and the axis adjustment mechanism 23 is an electrostatic deflector. In other words, the focusing lens 22 and the axis adjustment mechanism 23 include a plurality of electrodes facing each other to which a voltage is applied. Then, the voltage is applied to the electrodes to generate an electric field in a beam path 8, whereby the focusing lens 22 and the axis adjustment mechanism 23 controls the focusing and trajectory of an electron beam L1.

Other configurations are similar to those of the three-dimensional PBF-AM apparatus 1 according to the first embodiment example, and thus the description thereof will be omitted. With such a three-dimensional PBF-AM apparatus 1A including the focusing lens 22 and the axis adjustment mechanism 23, it is also possible to obtain actions and effects similar to those of the three-dimensional PBF-AM apparatus 1 according to the first embodiment example described above.

3. Third Embodiment Example

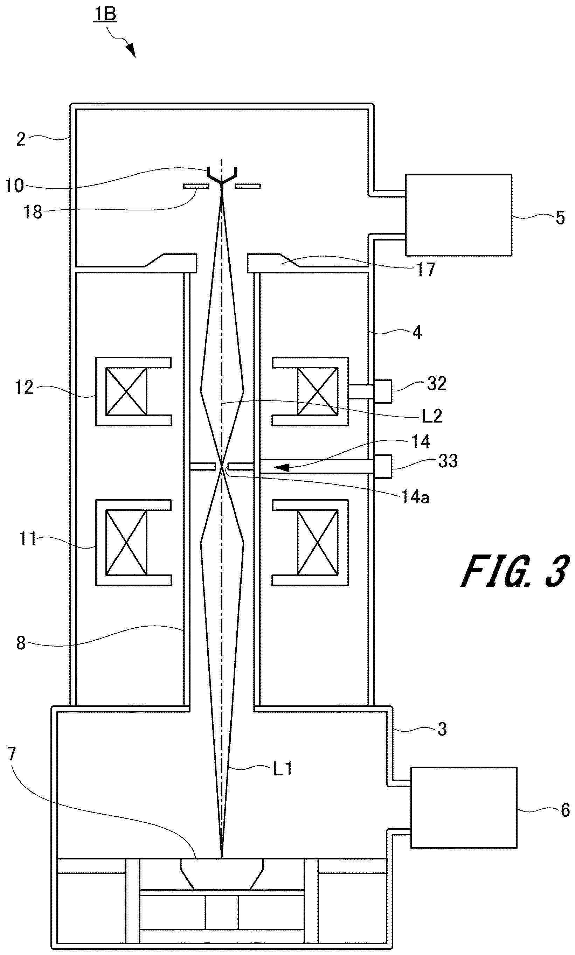

Next, with reference to FIG. 3, a three-dimensional PBF-AM apparatus 1B according to a third embodiment example will be described.

FIG. 3 is a schematic configuration diagram illustrating the three-dimensional PBF-AM apparatus 1B according to the third embodiment example.

The three-dimensional PBF-AM apparatus 1B according to the third embodiment example is different from the three-dimensional PBF-AM apparatus 1 according to the first embodiment example in a configuration of an axis adjustment mechanism. Therefore, parts in common with those of the three-dimensional PBF-AM apparatus 1 according to the first embodiment example, and redundant description will be omitted.

As illustrated in FIG. 3, the three-dimensional PBF-AM apparatus 1B includes a first axis adjustment mechanism 32 and a second axis adjustment mechanism 33. The first axis adjustment mechanism 32 is connected to a focusing lens 12, and the second axis adjustment mechanism 33 is connected to a differential evacuation AP14. In addition, the first axis adjustment mechanism 32 supports the focusing lens 12 in a manner such that the focusing lens 12 is movable along a second direction that is a direction orthogonal to an optical axis L2.

Then, the first axis adjustment mechanism 32 adjusts a position of the focusing lens 12 so that the optical axis L2 of the electron beam L1 passes through the center of the focusing lens 12.

The second axis adjustment mechanism 33 supports the differential evacuation AP14 in a manner such that the differential evacuation AP14 is movable along the second direction. Then, the second axis adjustment mechanism 33 adjusts a position of the differential evacuation AP14 so that the optical axis L2 of the electron beam L1 passes through the center of a restriction hole 14a of the differential evacuation AP14.

Other configurations are similar to those of the three-dimensional PBF-AM apparatus 1 according to the first embodiment example, and thus the description thereof will be omitted. With such a three-dimensional PBF-AM apparatus 1B including the first axis adjustment mechanism 32 and the second axis adjustment mechanism 33, it is also possible to obtain actions and effects similar to those of the three-dimensional PBF-AM apparatus 1 according to the first embodiment example described above.


4. Fourth Embodiment Example

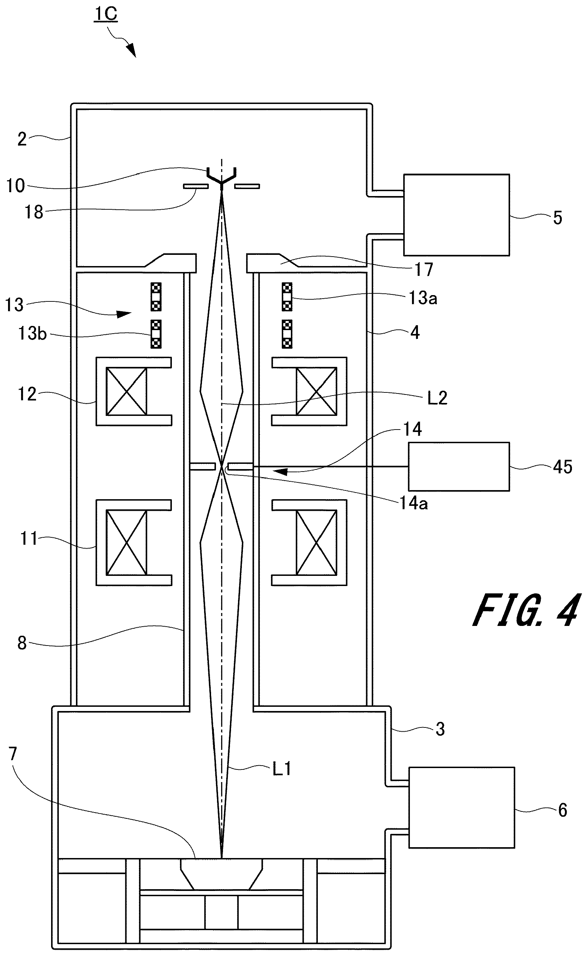

Next, with reference to FIG. 4, a three-dimensional PBF-AM apparatus 1C according to a fourth embodiment example will be described.

FIG. 4 is a schematic configuration diagram illustrating the three-dimensional PBF-AM apparatus 1C according to the fourth embodiment example.

The three-dimensional PBF-AM apparatus 1C according to the fourth embodiment example is different from the three-dimensional PBF-AM apparatus 1 according to the first embodiment example in that a beam detection unit 45 is provided. Therefore, parts in common with those of the three-dimensional PBF-AM apparatus 1 according to the first embodiment example, and redundant description will be omitted.

As illustrated in FIG. 4, the three-dimensional PBF-AM apparatus 1C includes the beam detection unit 45. The beam detection unit 45 detects that a differential evacuation AP14 has been irradiated with an electron beam L1. As the beam detection unit 45, for example, configurations of other various beam detection such as current detection, temperature detection, and X-ray detection are applied.

Then, when it is detected that the differential evacuation AP14 has been irradiated with the electron beam L1 from a detection signal of the beam detection unit 45, a control device (not illustrated) of the three-dimensional PBF-AM apparatus 1C stops emission of the electron beam L1 from an electron source 10. Consequently, it is possible to prevent the differential evacuation AP14 from being irradiated with the electron beam L1 and the differential evacuation AP14 from being damaged.

In addition, the control device may control an axis adjustment mechanism 13 on the basis of the detection signal of the beam detection unit 45. In other words, the control device controls the axis adjustment mechanism 13 so that the electron beam L1 does not hit the differential evacuation AP14 on the basis of the detection signal of the beam detection unit 45. Consequently, the work of adjusting the electron beam L1 by the axis adjustment mechanism 13 can be easily performed.

In addition, during the work of adjusting the axis adjustment mechanism 13, the output of the electron beam L1 emitted from the electron source 10 is weakened. As a result, it is possible to prevent the differential evacuation AP14 from being damaged during the work of adjusting.

Other configurations are similar to those of the three-dimensional PBF-AM apparatus 1 according to the first embodiment example, and thus the description thereof will be omitted. With such a three-dimensional PBF-AM apparatus 1C including the beam detection unit 45, it is also possible to obtain actions and effects similar to those of the three-dimensional PBF-AM apparatus 1 according to the first embodiment example described above.

5. Fifth Embodiment Example

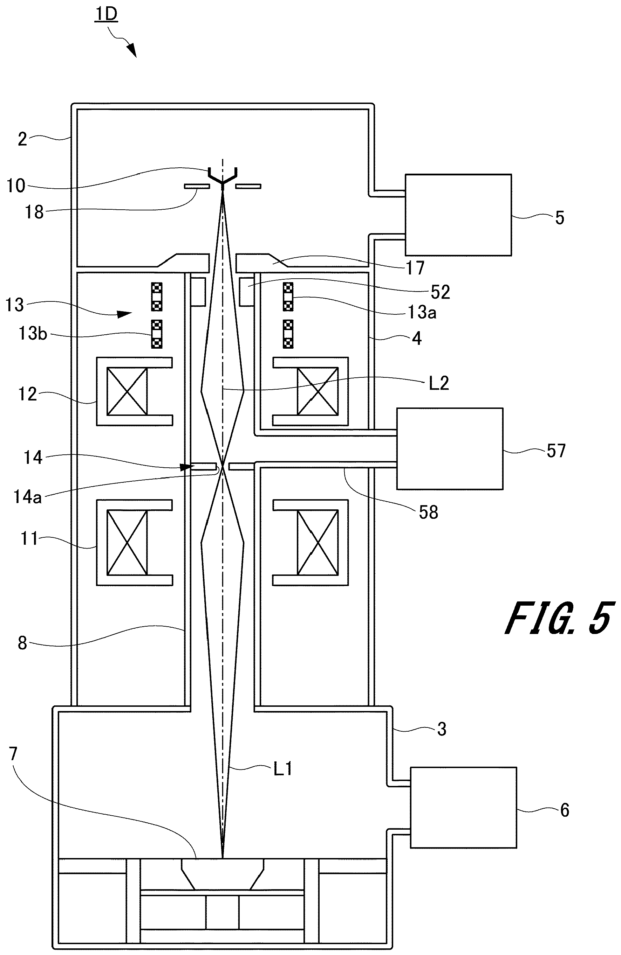

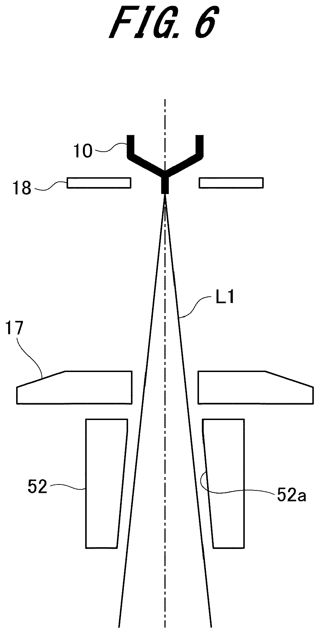

Next, with reference to FIGS. 5 and 6, a three-dimensional PBF-AM apparatus 1D according to a fifth embodiment example will be described.

FIG. 5 is a schematic configuration diagram illustrating the three-dimensional PBF-AM apparatus 1D according to the fifth embodiment example. FIG. 6 is an explanatory diagram illustrating a periphery of an anode in the three-dimensional PBF-AM apparatus 1D according to the fifth embodiment example.

The three-dimensional PBF-AM apparatus 1D according to the fifth embodiment example is different from the three-dimensional PBF-AM apparatus 1 according to the first embodiment example in that a third vacuum pump 57 and a vacuum conductance component 52. Therefore, parts in common with those of the three-dimensional PBF-AM apparatus 1 according to the first embodiment example, and redundant description will be omitted.

As illustrated in FIG. 5, the three-dimensional PBF-AM apparatus 1D includes the third vacuum pump 57 and the vacuum conductance component 52. In addition, an evacuation passage 58 is formed closer to a side of an electron gun chamber 2 than a differential evacuation AP14 in a beam path 8. The evacuation passage 58 is connected to the third vacuum pump 57. The third vacuum pump 57 evacuates air in a space on the side of the electron gun chamber 2 divided by the differential evacuation AP14 in the beam path 8.

As illustrated in FIGS. 5 and 6, the vacuum conductance component 52 is disposed in the vicinity of an anode 17 in the beam path 8. Specifically, the vacuum conductance component 52 is disposed on a downstream side of an electron beam L1 in an opening of the anode 17, that is, at a connection point between the electron gun chamber 2 and the beam path 8.

The vacuum conductance component 52 includes a cylindrical hole 52a through which the electron beam L1 can pass. An opening diameter of the cylindrical hole 52a is set to be smaller than an opening diameter of the beam path 8. The cylindrical hole 52a is formed along an optical axis L2 of the electron beam L1. In addition, the cylindrical hole 52a is formed in a tapered shape in accordance with the spread of the electron beam L1. Consequently, it is possible to prevent the electron beam L1 from hitting the vacuum conductance component 52 while securing the axial length of the cylindrical hole 52a. Then, the vacuum conductance component 52 makes it difficult for gas to flow from the beam path 8 into an internal space of the electron gun chamber 2.

The vacuum conductance component 52 is provided, whereby the internal space of the beam path 8 is divided into a space closer to a side of a build chamber 3 than the differential evacuation AP14 and a space surrounded by the differential evacuation AP14 and the vacuum conductance component 52. Therefore, the three-dimensional PBF-AM apparatus 1D according to the fifth embodiment example includes a first space formed by the electron gun chamber 2, a second space formed by the build chamber 3 and the differential evacuation AP14, and an intermediate space formed by the differential evacuation AP14 and the vacuum conductance component 52 in the beam path 8.

Furthermore, the first space, the second space, and the intermediate space are evacuated by a first vacuum pump 5, a second vacuum pump 6, and the third vacuum pump 57, respectively. The first vacuum pump 5, the second vacuum pump 6, and the third vacuum pump 57 are separate vacuum pumps. In this manner, the intermediate space is formed by the vacuum conductance component 52 and the differential evacuation AP14, whereby it is possible to further prevent gas from flowing from the second space on the side of the build chamber 3 into the first space on the side of the electron gun chamber 2. As a result, a degree of vacuum in the electron gun chamber 2 can be further increased.

Note that although an example in which the vacuum conductance component 52 and the anode 17 are separate members has been described, the present invention is not limited to this. For example, the anode 17 and the vacuum conductance component 52 may be integrally formed, that is, a cylindrical hole 52a as illustrated in FIG. 6 may be formed integrally with an anode 17.

Other configurations are similar to those of the three-dimensional PBF-AM apparatus 1 according to the first embodiment example, and thus the description thereof will be omitted. With such a three-dimensional PBF-AM apparatus 1D including the third vacuum pump 57 and the vacuum conductance component 52, it is also possible to obtain actions and effects similar to those of the three-dimensional PBF-AM apparatus 1 according to the first embodiment example described above.

In addition, the configurations of the three-dimensional PBF-AM apparatuses 1B, 1C, and 1D according to the second to fourth embodiment examples may be applied to the three-dimensional PBF-AM apparatus 1D according to the fifth embodiment example.

Note that the present invention is not limited to the embodiment examples described above and illustrated in the drawings, and various modifications can be made without departing from the gist of the invention described in the claims.

In the embodiment examples described above, an example in which a three-pole structure of the electron source (cathode) 10, the Wehnelt 18, and the anode 17 is applied as the electron gun has been described, but the present invention is not limited to this. An electron gun may have a two-pole structure without the Wehnelt 18, or the number of electrodes may be further increased.

For example, in the embodiment examples described above, an example in which a metal powder of titanium, aluminum, iron, or the like is applied as the powder material has been described, but the present invention is not limited to this, and a resin or the like may be used as the powder material.

In the present specification, terms such as "parallel" and "orthogonal" have been used. However, these terms "parallel" and "orthogonal" do not mean only strict "parallel" and strict "orthogonal", respectively. The term "parallel" may include meanings of being "parallel" and also being "substantially parallel" in a range in which the function can be exhibited. The term "orthogonal" may include meanings of being "orthogonal" and also being "substantially orthogonal" in a range in which the function can be exhibited.

Reference Signs List

| | |
|---|---|
| 1, 1A, 1B, 1C, 1D | Three-dimensional powder bed fusion additive manufacturing (PBF-AM) apparatus |
| 2 | Electron gun chamber |
| 3 | Build chamber |
| 4 | Electron optical chamber |
| 5 | First vacuum pump |
| 6 | Second vacuum pump |
| 7 | Build unit |
| 8 | Beam path |
| 10 | Electron source |
| 11 | Objective lens |
| 12, 22 | Focusing lens |
| 13, 23 | Axis adjustment mechanism |
| 13a | First adjustment unit |
| 13b | Second adjustment unit |
| 14 | Differential evacuation aperture |
| 14a | Restriction hole |
| 17 | Anode |
| 18 | Wehnelt |
| 32 | First axis adjustment mechanism |
| 33 | Second axis adjustment mechanism |
| 45 | Beam detection unit |
| 52 | Vacuum conductance component |
| 52a | Cylindrical hole |
| 57 | Third vacuum pump |
| 58 | Evacuation passage |
| L1 | Electron beam |
| L2 | Optical axis |

**Claims**

1.  A three-dimensional powder bed fusion additive manufacturing (PBF-AM) apparatus (1), comprising:

an electron gun chamber (2) accommodating an electron gun;
a build chamber (3) accommodating a build unit (7) to be irradiated with an electron beam (L1) emitted from the electron gun;
a first vacuum pump (5) configured to evacuates gas in the electron gun chamber (2);
a second vacuum pump (6) configured to evacuate gas in the build chamber (3);
a beam path (8) configured to communicate the electron gun chamber (2) and the build chamber (3) and through which the electron beam (L1) passes;
a differential evacuation aperture (14) provided in the beam path (8) to divide an internal space of the beam path (8) into two, the differential evacuation aperture (14) having a restriction hole (14a) through which the electron beam (L1) can pass;
a focusing lens (12) configured to focus the electron beam (L1) emitted from the electron gun using the restriction hole (14a) of the differential evacuation aperture (14); and

an axis adjustment mechanism (13) configured to adjust a trajectory of the electron beam (L1) or positions of the focusing lens (12) and the differential evacuation aperture (14) so that an optical axis (L2) of the electron beam (L1) passes through both a center of the restriction hole (14a) of the differential evacuation aperture (14) and a center of the focusing lens (12).

2. The three-dimensional PBF-AM apparatus (1) according to claim 1, wherein

the axis adjustment mechanism (13) is configured to adjust the trajectory of the electron beam (L1), and has a first adjustment unit (13a) and a second adjustment unit (13b) disposed along the optical axis (L2) of the electron beam (L1).

3. The three-dimensional PBF-AM apparatus (1) according to claim 2, wherein the axis adjustment mechanism (13) is an electromagnetic deflector.

4. The three-dimensional PBF-AM apparatus (1) according to claim 2, wherein the focusing lens (12) and the axis adjustment mechanism (13) are electrostatic deflectors.

5. The three-dimensional PBF-AM apparatus (1) according to claim 1, wherein the axis adjustment mechanism (13) includes:

a first axis adjustment mechanism (32) configured to move the focusing lens (12) in a direction orthogonal to the optical axis (L2); and
a second axis adjustment mechanism (33) configured to move the differential evacuation aperture (14) in the direction orthogonal to the optical axis (L2).

6. The three-dimensional PBF-AM apparatus (1) according to any preceding claim, further comprising a beam detection unit (45) configured to detect that the differential evacuation aperture (14) has been irradiated with the electron beam (L1).

7. The three-dimensional PBF-AM apparatus (1) according to any preceding claim, further comprising:

a vacuum conductance component (52) that is disposed at a connection point between the electron gun chamber (2) and the beam path (8) and through which the electron beam (L1) can pass; and
a third vacuum pump (57) configured to evacuate gas in a space divided by the differential evacuation aperture (14) in the beam path (8), the space being formed of the differential evacuation aperture (14) and the vacuum conductance component (52).

8. The three-dimensional PBF-AM apparatus (1) according to claim 7, wherein the vacuum conductance component (52) is formed integrally with an anode (17) fixing the electron gun.

*FIG. 1*

*FIG. 2*

*FIG. 3*

*FIG. 4*

*FIG. 5*

# FIG. 6

## FIG. 7

# EP 4 299 217 A1

| | Europäisches Patentamt European Patent Office Office européen des brevets | **EUROPEAN SEARCH REPORT** | | Application Number EP 23 17 7180 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/193192 A1 (FAGER MATTIAS [SE] ET AL) 27 June 2019 (2019-06-27) * figures 1,2 * * paragraph [0052] – paragraph [0055] * * paragraph [0013] * ----- | 1-8 | INV. B22F10/28 B22F12/70 B33Y10/00 B33Y30/00 B22F12/41 |
| A | US 2019/337085 A1 (HAMAGUCHI SHINICHI [JP] ET AL) 7 November 2019 (2019-11-07) * figure 5 * * figure 22 * * claim 1 * * paragraph [0201] * ----- | 4 | |
| A | US 2013/300286 A1 (LJUNGBLAD ULRIC [SE] ET AL) 14 November 2013 (2013-11-14) * claims 1-30 * * abstract * ----- | 1-8 | |

TECHNICAL FIELDS SEARCHED (IPC)

B22F
B33Y
B29C

The present search report has been drawn up for all claims

| Place of search | Date of completion of the search | Examiner |
|---|---|---|
| The Hague | 25 September 2023 | Godino Martinez, M |

EPO FORM 1503 03.82 (P04C01)

## ANNEX TO THE EUROPEAN SEARCH REPORT
## ON EUROPEAN PATENT APPLICATION NO.

EP 23 17 7180

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2023

| Patent document cited in search report | | Publication date | Patent family member(s) | | Publication date |
|---|---|---|---|---|---|
| US 2019193192 | A1 | 27-06-2019 | CN 111512410 | A | 07-08-2020 |
| | | | EP 3729484 | A1 | 28-10-2020 |
| | | | US 2019193192 | A1 | 27-06-2019 |
| | | | WO 2019121390 | A1 | 27-06-2019 |
| US 2019337085 | A1 | 07-11-2019 | CN 109716480 | A | 03-05-2019 |
| | | | US 2019337085 | A1 | 07-11-2019 |
| | | | WO 2018131109 | A1 | 19-07-2018 |
| US 2013300286 | A1 | 14-11-2013 | BR 112014027632 | A2 | 17-04-2018 |
| | | | CN 104272425 | A | 07-01-2015 |
| | | | EP 2847782 | A2 | 18-03-2015 |
| | | | JP 2015525428 | A | 03-09-2015 |
| | | | KR 20150010946 | A | 29-01-2015 |
| | | | KR 20190130062 | A | 20-11-2019 |
| | | | RU 2014141566 | A | 27-06-2016 |
| | | | US 2013300286 | A1 | 14-11-2013 |
| | | | WO 2013167391 | A2 | 14-11-2013 |

EPO FORM P0459

For more details about this annex : see Official Journal of the European Patent Office, No. 12/82

**REFERENCES CITED IN THE DESCRIPTION**

**Patent documents cited in the description**

- JP 2015168228 A